# EUROPEAN PATENT APPLICATION

(11) **EP 4 541 433 A1**
(43) Date of publication of application: **23.04.2025**
(21) Application number: 24207613.1
(22) Date of filing: 18.10.2024
(51) Int. Cl.: A63B 71/06, A63F 13/90, A63B 9/00, A63B 24/00, A63B 17/00, A63B 69/00

(54) **INTERACTIVE GAME APPARATUS**

(30) Priority: 20.10.2023 NL 2036084
(71) Applicant: Scheepsservice Installatietechniek J. de Jong B.V., 6541 CM Nijmegen (NL)
(72) Inventor: DE JONG, Dirk Jan, 6579 AN Kekerdom (NL)
(74) Representative: Patentwerk B.V.

(57) **Abstract**

The invention relates to an interactive game apparatus, in particular for outdoor use, comprising: a plurality of interactive elements, comprising: at least one target configured to activate a target signal, and at least one detection element configured to detect a player, and to consequently generate a responsive signal, and a control unit connected to the interactive elements for controlling the target signals and for processing the responsive signals.

## Description

The invention relates to an interactive game apparatus, in particular for outdoor use.

Living in the digital era brings new technologies which makes daily live easier and less physical demanding, resulting in physically inactive individuals. These new technologies lead to sedentary behaviour and an increased risk of obesity in both children and adults, even though it is well known that a physically active lifestyle benefits both physical and mental health of individuals. The challenge, however, is to motivate people to be physically active.

Therefore it is a goal of the invention to provide an apparatus that encourages physical activity of people.

The present invention thereto provides an interactive game apparatus, in particular for outdoor use, comprising: at least one frame comprising a plurality of interconnected tubes or structural components, wherein the frame is configured to at least partially surround a playing area for a player, a plurality of interactive elements provided around the playing area configured to trigger a response of the player, wherein each interactive element comprises: at least one target configured to activate a target signal perceptible to the player, such as a light signal and/or an audio signal, and at least one detection element configured to detect the player when the player is close to and/or in contact with the respective interactive element, and to consequently generate a responsive signal, and a control unit (electrically) connected to the interactive elements for controlling the target signals and for processing the responsive signals, such that a target signal associated with an interactive element is deactivated and/or modified upon receipt of a responsive signal associated with the same interactive element. In the description of the invention the term tube is considered to include alternatives like beam, post, upright and the like, and is not considered to be limited to hollow cylindrical elements, although such elements would fall within the scope of the term.

Providing an interactive game aims to increase the willingness of individuals to become physically active. The interactive elements, in particular the targets, demand a response of the player in order to play the game. Since the interactive elements are provided around the playing area, the interactive elements thus force the player to move within/around the playing area. Preferably, the interactive elements are dispersed around the playing area to enhance the distance between different interactive elements to increase the needed physical activity of the player. The apparatus according to the invention for example requires the player to move at least in a length direction and in a width of the playing area. Preferably, the apparatus requires the player to also move in a height direction of the playing area. In particular the frame is connected to each of the interactive elements, be it through wires, through a wireless signal connection, tubing or other connecting elements.

The interactive elements are for example changeable in height. The interactive elements may for example be function components, like a basket, a ring or a button, which may be mounted on a pole or pillar at a variable height. This allows the difficulty of the game to be set or allows changing game components when needed, in particular when certain game components need to be played at different heights. The pole or pillar may for example be a telescopic one or a modular one, in order to be able to change the heights.

The interactive game apparatus may comprise at least one manually chargeable power unit configured to at least partially power the control unit and/or the interactive elements. In particular, the manually chargeable power unit is, directly or indirectly, (electrically) connected to the control unit and/or at least part of the interactive elements. More in particular, the game apparatus thus may comprise at least one manually chargeable power unit, wherein the power unit may be chargeable by using or operating at least one of the interactive elements and/or by using at least one of the components of the interactive game apparatus, to charge the apparatus during use. A manually chargeable power unit is beneficial since it (at least partially) provides an energy self-sufficient apparatus and it also requires physical activity from the players. Preferably, the power unit generates enough power to function without being connected to mains electricity. The power unit may be connected to at least a part of the frame and/or an interactive element, which allows an efficient energy transfer from the power unit to the control unit and/or the interactive elements. The power unit may typically be electrically connected to the control unit and/or the interactive elements by wiring to power those components. Preferably, the manually chargeable power unit is a crank or a piezo-element. The manually chargeable power unit is preferably configured to at least generate 80 Watts. The manually chargeable power unit can preferably be charged within 15 seconds, more preferably within 13 seconds.

The interactive game apparatus may comprise at least one solar panel and/or at least one wind turbine connected to or configured to be connected to the frame to at least partially power the control unit and the interactive elements. The solar panel and/or the wind turbine is for example assembled to the frame. The solar panel and/or the wind turbine preferably powers the control unit and the interactive elements directly via a wire or indirectly with the intervention of at least one power storage such as a battery. A solar panel and/or a wind turbine is beneficial since it (at least partially) provides an energy self-sufficient apparatus. A solar panel is further beneficial when used outdoor, since the apparatus is most likely operated under positive weather conditions.

The interactive game apparatus may comprise at least one rechargeable battery configured to store power and to at least partially power the control unit and the interactive elements. The rechargeable battery may further be connected to the control unit and the interactive elements to power the control unit and the interactive elements, respectively. The rechargeable battery may be connected to the control unit and the interactive elements by wiring. The rechargeable battery allows the storage of a possible power surplus to be used later. It is imaginable that the rechargeable battery is configured to at least partially store power from the manually chargeable power unit and/or the at least one solar panel. The rechargeable battery may be connected to the manually chargeable power unit and/or solar panel, for example by means of wires or through a wireless signal connection. The battery may for example be incorporated in one of the structural components of the system, such as in one of the interactive elements or in the frame.

It is imaginable that the control unit comprises a GSM or other mobile or communication module configured to communicate with a computer network. Therewith, information can be gathered for example the location of the apparatus, frequency of starting an interactive game, and/or duration of an average game, and the like.

The interactive elements may be interconnected to the control unit and/or to a power source, in particular the manually chargeable power unit, by wiring, wherein the wiring is guided through the tubes of the frame. This embodiment provides an outdoor-proof apparatus which is resistant to different weather conditions. Preferably, the wiring is completely accommodated in the tubes of the frame. The apparatus may be free from underground wiring. Resulting in a playing area free from wires, which is advantageous since the wires cannot obstruct the player during playing the interactive game. Additionally, completely accommodated wires are aesthetically more appealing.

At least one interactive element may be mounted on at least one tube of the frame, wherein preferably each interactive element is mounted onto at least one tube of the frame. Therewith, a (more) compact apparatus is realised. Furthermore, due to the lack of multiple separate components of the apparatus, the apparatus is less prone to breakage.

The control unit may be programmed to activate the interactive elements based upon an algorithm and/or wherein the control unit is programmed to activate the interactive elements randomly. Preferably, wherein the control unit is programmed to activate the target signal randomly and/or based upon an algorithm. This is beneficial since it provides an automatically variating interactive game. Additionally, a variety of target signals could be provided.

The at least one detection element may be a sensor, a push-button, a switch, or a combination thereof. The detection element may be a sensor configured to detect motion when the player is close to the detection element. Since contact is not needed to detect the player, the sensor is less prone to breakage and is capable of detecting the player relatively quick. The detection element may be a push-button and/or a switch configured to detect motion upon contact of the player with the detection element. The push-button and/or the switch are robust and outdoor-proof detection elements.

The control unit may comprise a timer configured to measure the time needed to receive at least one responsive signal from at least one respective interactive element and/or to set a time-interval in which the control unit is receptive for responsive signals of the interactive elements. This embodiment allows to measure the reaction speed of the player based upon the received responsive signal. Furthermore, this embodiment allows to set a time in which the game should be finished to motivate the player to complete the game faster.

The interactive game apparatus may comprise a display configured to display information of the interactive game. It is further imaginable that the interactive game apparatus comprises a score counter configured to count the number of generated responsive signals corresponding to the interactive elements. These embodiments provide the player with information for example relating to game, the progress of the game, the performance of the player, and/or the performance of the with respect to other participating players.

The frame may be a climbing frame or a functional fitness frame. Optionally, existing climbing frames and/or functional fitness frames can be adapted for an interactive game apparatus. Climbing frames and/or functional fitness frames usually comprise substantially vertical tubes interconnected with substantially horizontal tubes and/or angled tubes with respect to the ground. This provides the possibility to provide a three dimensional playing area, wherein both vertical and horizontal and/or angled tubes may be provided with interactive elements. This embodiment demands more physical activity of the player. In a particular embodiment, the interactive game apparatus is thus an interactive fitness game apparatus, wherein the interactive elements have a fitness component to them and the apparatus is aimed to provide a fitness exercise. At least one fitness component may be configured to charge the (manually chargeable) power unit upon use and/or operation of said fitness component by a player. Therewith, at least part of the control unit and/or at least part of at least one interactive element is powered.

The frame may has a geometrical shape, such as a circle, semicircle, crescent, and the like. It is furthermore possible that the frame may has a polygon shape, such as a heptagon, hexagon, septagon, octagon, and the like. The frame may define a footprint, wherein the footprint may has a geometrical shape, such as a circle, semicircle, crescent, and the like, or a polygon shape, such as a heptagon, hexagon, septagon, octagon, and the like. Optionally, the frame at least partially encloses a space having a geometrical shape, such as a circle, semicircle, crescent, and the like, or a polygon shape, such as a heptagon, hexagon, septagon, octagon, and the like. It is possible that the space defines the playing area for the player, which preferably provides a three dimensional playing area. A three dimensional playing area increases the demand of physical activity needed from the player to be detected by the interactive elements. It is imaginable that at least one interactive element faces the space, preferably wherein all the interactive elements face the space. This is beneficial when a relatively compact design of the frame is desired, for example for smaller people like children or when a relatively fast game is desired. It is possible that at least one interactive element faces away from the space, preferably wherein all the interactive elements face away from the space. Resulting in a relatively large interactive game, resulting in an increase in the needed physical activity of the player. By providing the frame in the described shape, a more efficient use can be made of the available space too, in particular when compared to a configuration where the interactive elements would be placed in a line, one after the other.

The apparatus may be free from a bottom plate. An apparatus free from a bottom plate provides flexibility in the way of placing the apparatus and/or the desired location for the apparatus. Furthermore, the apparatus may be mainly composed of steel provided with a coating. The usage of steel with a coating is beneficial for the strength of the apparatus. A bottom plate composed of steel with a coating results in a slippery bottom, especially in outdoor use. A slippery bottom could result in injuries for the player of the interactive game. An apparatus free from a bottom plate provides the flexibility of choosing a desired underground for the apparatus.

The invention will be further elucidated by means of the following non-limitative clauses.
1. Interactive game apparatus, in particular for outdoor use, comprising:
   - at least one frame comprising a plurality of interconnected tubes, wherein the frame is configured to at least partially surround a playing area for a player,
   - a plurality of interactive elements provided around the playing area configured to trigger a response of the player, wherein each interactive element comprises:
      ∘ at least one target configured to activate a target signal perceptible to the player, such as a light signal and/or an audio signal, and
      ∘ at least one detection element configured to detect the player when the player is close to and/or in contact with the respective interactive element, and to consequently generate a responsive signal, and
   - a control unit connected to the interactive elements for controlling the target signals and for processing the responsive signals, such that a target signal associated with an interactive element is deactivated and/or modified upon receipt of a responsive signal associated with the same interactive element.
2. Interactive game apparatus according to clause 1, comprising at least one manually chargeable power unit configured to at least partially power the control unit and the interactive elements.
3. Interactive game apparatus according to any of the preceding clauses, comprising at least one solar panel connected to or configured to be connected to the frame to at least partially power the control unit and the interactive elements.
4. Interactive game apparatus according to any of the preceding clauses, comprising at least one rechargeable battery configured to store power and to at least partially power the control unit and the interactive elements.
5. Interactive game apparatus according to any of the preceding clauses, wherein the interactive elements are interconnected to the control unit and/or to a power source by wiring, wherein the wiring is guided through the tubes of the frame.
6. Interactive game apparatus according to any of the preceding clauses, wherein at least one interactive element is mounted on at least one tube of the frame, preferably wherein each interactive element is mounted onto at least one tube of the frame.
7. Interactive game apparatus according to any of the preceding clauses, wherein the control unit is programmed to activate the interactive elements based upon an algorithm and/or wherein the control unit is programmed to activate the interactive elements randomly.
8. Interactive game apparatus according to any of the preceding clauses, wherein the at least one detection element is a sensor, a push-button, a switch, or a combination thereof.
9. Interactive game apparatus according to any of the preceding clauses, wherein the control unit comprises a timer configured to measure the time needed to receive at least one responsive signal from at least one respective interactive element and/or to set a time-interval in which the control unit is receptive for responsive signals of the interactive elements.
10. Interactive game apparatus according to any of the preceding clauses, comprising a display configured to display information of the interactive game.
11. Interactive game apparatus according to any of the preceding clauses, comprising a score counter configured to count the number of generated responsive signals corresponding to the interactive elements.
12. Interactive game apparatus according to any of the preceding clauses, wherein the frame is a climbing frame or a functional fitness frame.
13. Interactive game apparatus according to any of the preceding clauses, wherein the frame has a geometrical shape, such as a circle, semicircle, crescent, and the like.
14. Interactive game apparatus according to any of the preceding clauses, wherein the frame has a polygon shape, such as a heptagon, hexagon, septagon, octagon, and the like.
15. Interactive game apparatus according to any of the preceding clauses, wherein the apparatus is free from a bottom plate.

The invention will be further elucidated by means of non-limiting exemplary embodiments illustrated in the following figures, in which:
- figure 1 shows a perspective view of an apparatus according to the invention, and
- figure 2 shows a top view of an apparatus according to the invention.

Within these figures, similar reference numbers correspond to similar or equivalent elements or features.

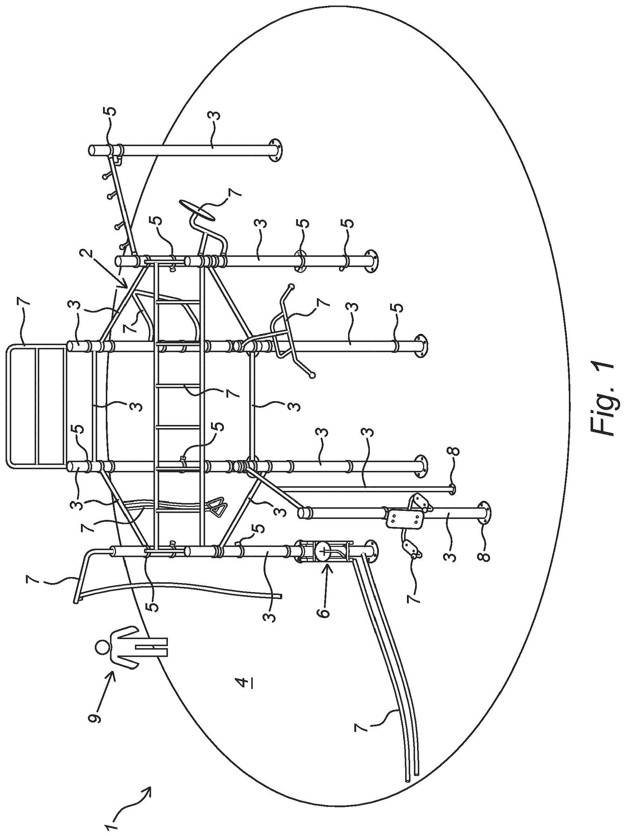

Figure 1 shows a perspective view of the interactive game apparatus 1 according to the invention. The interactive game apparatus 1 comprises at least one frame 2 comprising a plurality of interconnected tubes 3, wherein the frame 2 is configured to at least partially surround a playing area 4 for a player 9, a plurality of interactive elements 5 provided around the playing area 4 configured to trigger a response of the player 9, wherein each interactive element 5 comprises: at least one target configured to activate a target signal perceptible to the player, such as a light signal and/or an audio signal, and at least one detection element configured to detect the player when the player is close to and/or in contact with the respective interactive element 5, and to consequently generate a responsive signal, and a control unit connected to the interactive elements 5 for controlling the target signals and for processing the responsive signals, such that a target signal associated with an interactive element 5 is deactivated and/or modified upon receipt of a responsive signal associated with the same interactive element 5. The shown interactive game apparatus 1 further comprise a manually chargeable power unit 6 configured to at least partially power the control unit and the interactive elements. The shown manually chargeable power unit 6 is a crank which enables the charging of the power unit by rotating the lever of the power unit 6. The manually chargeable power unit 6 is electrically connected to the control unit and/or to at least part of the interactive elements 5. Preferably, the manually chargeable power unit 6 is via wiring through the tubes 3 of the frame 1 electrically connected to the control unit and/or at least part of the interactive elements 5. In the shown embodiment the frame 2 comprises a plurality of exercise elements 7, such as a pull-up bar, a rope, a wall ball target, rings, etcetera. The exercise elements 7 may comprise a converter configured to convert kinetic energy into electrical energy to at least partially power the control unit and/or a power source. The player 9 may interact with an exercising element 7, for example swinging ropes, creating kinetic energy. The exercising element 7, in particular the converter, may be connected to the control unit and/or to a power source by wiring, wherein the wiring is guided through the tubes 3 of the frame 2. The interactive elements 5 are mounted on the tubes 3 of the frame 2. A tube 3 can comprise one or multiple interactive elements 5. The shown frame 2 comprises a plurality of substantially vertical tubes 2, which vertical tubes 2 comprise a base 8 configured to make contact with the ground. The diameter of the bases 8 is larger than the diameter of the tubes 2 to increase the stability of the frame 2. The shown frame 2 encloses an octagon shaped space.

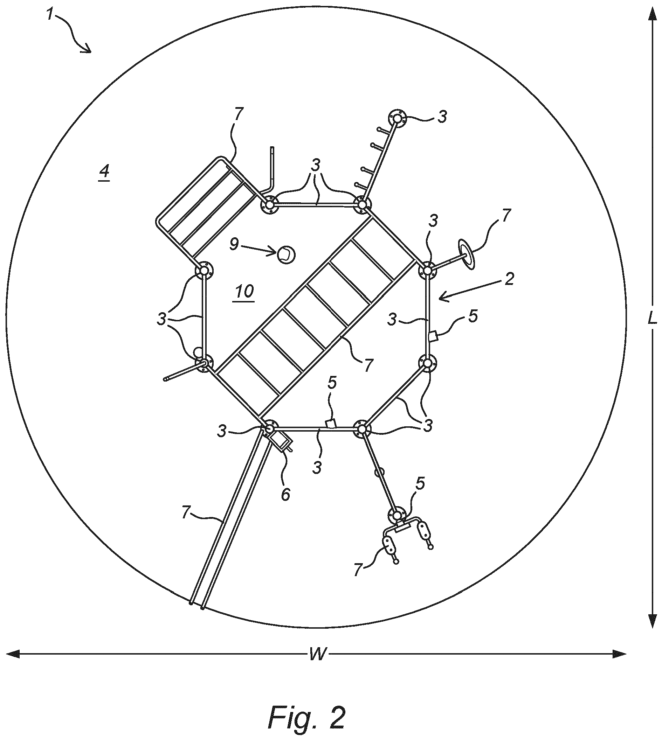

Figure 2 shows a top view of the interactive game apparatus 1 according to the invention. The shown frame 2 encloses a space 10 comprising a polygon shape, in particular an octagon shape. The interactive elements 5 are mounted on the tubes 3 of the frame 2. A first fraction of the interactive elements 5 is mounted such that they face the space 10. Therewith, the playing area 4 is located within borders defined by the frame 2. A second fraction of the interactive elements 5 is mounted on the tubes 3 such that they face away from the space 10. Therewith, the playing area 4 also extends beyond the borders defined by the frame 2. The player 9 needs to move at least in the length (L) direction and in the width (W) of the playing area 4 to reach all the interactive elements 5.

It will be clear that the invention is not limited to the exemplary embodiments which are illustrated and described here, but that countless variants are possible within the framework of the attached claims, which will be obvious to the person skilled in the art. In this case, it is conceivable for different inventive concepts and/or technical measures of the above-described variant embodiments to be completely or partly combined without departing from the inventive idea described in the attached claims.

The verb 'comprise' and its conjugations as used in this patent document are understood to mean not only 'comprise', but to also include the expressions 'contain', 'substantially contain', 'formed by' and conjugations thereof.

## Claims

1. Interactive game apparatus, in particular for outdoor use, comprising:
- at least one frame comprising a plurality of interconnected tubes, wherein the frame is configured to at least partially surround a playing area for a player,
- a plurality of interactive elements provided around the playing area configured to trigger a response of the player, wherein each interactive element comprises:
∘ at least one target configured to activate a target signal perceptible to the player, such as a light signal and/or an audio signal, and
∘ at least one detection element configured to detect the player when the player is close to and/or in contact with the respective interactive element, and to consequently generate a responsive signal,
- a control unit connected to the interactive elements for controlling the target signals and for processing the responsive signals, such that a target signal associated with an interactive element is deactivated and/or modified upon receipt of a responsive signal associated with the same interactive element, and
- at least one manually chargeable power unit configured to at least partially power the control unit and/or the interactive elements.

2. Interactive game apparatus according to claim 1, wherein the manually chargeable power unit is a crank or a piezo-element.

3. Interactive game apparatus according to claim 1 or claim 2, wherein the manually chargeable power unit is configured for generating at least 80 Watts.

4. Interactive game apparatus according to any of the preceding claims, comprising at least one solar panel connected to or configured to be connected to the frame to at least partially power the control unit and the interactive elements.

5. Interactive game apparatus according to any of the preceding claims, comprising at least one rechargeable battery configured to store power and to at least partially power the control unit and the interactive elements.

6. Interactive game apparatus according to any of the preceding claims, wherein the interactive elements are interconnected to the control unit and/or to a power source by wiring, wherein the wiring is guided through the tubes of the frame.

7. Interactive game apparatus according to any of the preceding claims, wherein at least one interactive element is mounted on at least one tube of the frame, preferably wherein each interactive element is mounted onto at least one tube of the frame, and/or wherein at least one interactive element is changeable in height.

8. Interactive game apparatus according to any of the preceding claims, wherein the control unit is programmed to activate the interactive elements based upon an algorithm and/or wherein the control unit is programmed to activate the interactive elements randomly.

9. Interactive game apparatus according to any of the preceding claims, wherein the at least one detection element is a sensor, a push-button, a switch, or a combination thereof.

10. Interactive game apparatus according to any of the preceding claims, wherein the control unit comprises a timer configured to measure the time needed to receive at least one responsive signal from at least one respective interactive element and/or to set a time-interval in which the control unit is receptive for responsive signals of the interactive elements.

11. Interactive game apparatus according to any of the preceding claims, comprising a display configured to display information of the interactive game.

12. Interactive game apparatus according to any of the preceding claims, comprising a score counter configured to count the number of generated responsive signals corresponding to the interactive elements.

13. Interactive game apparatus according to any of the preceding claims, wherein the frame is a climbing frame or a functional fitness frame.

14. Interactive game apparatus according to any of the preceding claims, wherein the frame has a geometrical shape, such as a circle, semicircle, crescent, and the like, or a polygon shape, such as a heptagon, hexagon, septagon, octagon, and the like.

15. Interactive game apparatus according to any of the preceding claims, wherein the apparatus is free from a bottom plate.
